# EUROPÄISCHE PATENTANMELDUNG

(11) **EP 2 778 290 A2**
(43) Veröffentlichungstag der Anmeldung: **17.09.2014**
(21) Anmeldenummer: 14154979.0
(22) Anmeldetag: 13.02.2014
(51) Int. Cl.: E02B 9/04

(54) **Vorrichtung zur Entnahme von Wasser aus einem Gewässer**

(30) Priorität: 13.03.2013 DE 102013204320
(71) Anmelder: EKS Anlagenbau, 72250 Freudenstadt (DE)
(72) Erfinder: Wirth, Rainer, 72250 Freudenstadt (DE)
(74) Vertreter: DREISS Patentanwälte PartG mbB

(57) **Zusammenfassung**

Es wird eine Vorrichtung zur Entnahme von Wasser aus einem Gewässer beschrieben. Es ist eine Wanne (17) vorhanden, die einen Boden und Seitenwände aufweist, und die mit ihren Seitenwänden über die Wasseroberfläche (13) des Gewässers übersteht. Es ist ein erstes Rohr (18) vorhanden, das sich von dem Gewässer in die Wanne (17) erstreckt und dessen oberes Ende (19) sich unterhalb der Wasseroberfläche (13) des Gewässers (10) befindet. Es ist ein zweites Rohr (26) vorhanden, das mit einem unteren Ende (29) in die Wanne (17) eintaucht und mit einem oberen Bereich über die Wasseroberfläche (13) des Gewässers hinausragt. Das Wasser ist aus dem Gewässer über das erste Rohr (18) in die Wanne (17) und aus der Wanne (17) über das zweite Rohr (26) an ein Ufer des Gewässers förderbar.

## Beschreibung

Die Erfindung betrifft eine Vorrichtung zur Entnahme von Wasser aus einem Gewässer.

Es ist bekannt, das Wasser aus einem tiefen Bereich eines Gewässers mit Hilfe einer elektrischen Pumpe anzusaugen und dem Gewässer zu entnehmen. Beispielsweise kann ein mit der Pumpe verbundener Schlauch in das Gewässer eingebracht werden, um das Wasser aus dem Gewässer zu fördern. Der Schlauch kann beispielsweise zu einem gewässernahen Kiesbereich gelegt werden, um das Wasser dann dort abzulassen. Üblicherweise erfordert der Betrieb der Pumpe relativ viel elektrische Energie und damit einen Anschluss an ein elektrisches Energieversorgungsnetz.

Aus der DE 20 2004 008 003 U1 ist eine Vorrichtung bekannt, mit der Wasser in einem Gewässer zirkuliert werden kann. Die Vorrichtung weist ein Rohr auf, dessen oberes Ende unterhalb der Wasseroberfläche angeordnet ist. Dort ist auch ein elektrisch angetriebenes Schaufelrad vorhanden, mit dem das Wasser in dem Rohr nach oben gefördert werden kann. Der Betrieb des Schaufelrads kann beispielsweise mit Hilfe einer photovoltaischen Anlage bewerkstelligt werden. Mit Hilfe der beschriebenen Vorrichtung kann jedoch kein Wasser aus dem Gewässer entnommen werden.

Aufgabe der Erfindung ist es, eine Vorrichtung zur Entnahme von Wasser aus einem Gewässer zu schaffen, die einen geringeren Energiebedarf besitzt.

Die Erfindung löst diese Aufgabe durch eine Vorrichtung nach dem Anspruch 1.

Erfindungsgemäß ist eine Wanne vorhanden, die einen Boden und Seitenwände aufweist, und die mit ihren Seitenwänden über die Wasseroberfläche des Gewässers übersteht. Es ist ein erstes Rohr vorhanden, das sich von dem Gewässer in die Wanne erstreckt und dessen oberes Ende sich unterhalb der Wasseroberfläche des Gewässers befindet. Es ist ein zweites Rohr vorhanden, das mit einem unteren Ende in die Wanne eintaucht und mit einem oberen Bereich über die Wasseroberfläche des Gewässers hinausragt. Das Wasser ist aus dem Gewässer über das erste Rohr in die Wanne und aus der Wanne über das zweite Rohr an ein Ufer des Gewässers förderbar.

Der Vorteil der erfindungsgemäßen Vorrichtung besteht darin, dass zur Förderung des Wassers nur relativ wenig Energie erforderlich ist. Dies ergibt sich daraus, dass das Wasser in dem ersten Rohr nur unterhalb der Wasseroberfläche des Gewässers bewegt werden muss, was wenig Energie erfordert. In dem zweiten Rohr muss das Wasser wohl über die Wasseroberfläche des Gewässers angehoben werden, jedoch nur in einem geringen Umfang. Dies erfordert ebenfalls nur wenig Energie.

Bei einer Ausgestaltung der Erfindung sind in dem ersten Rohr und/oder in dem zweiten Rohr ein Schaufelrad oder ein Schneckenrad oder dergleichen vorhanden, die vorzugsweise von jeweils einem Elektromotor angetrieben sind. Dabei ist es besonders vorteilhaft, wenn eine photovoltaische Anlage zur Erzeugung der für den Betrieb der Elektromotoren erforderlichen Energie vorhanden ist. Damit ist es möglich, die erfindungsgemäße Vorrichtung als Inselbetrieb zu realisieren, also ohne einen Anschluss an ein elektrisches Energieversorgungsnetz.

Bei einer anderen Ausgestaltung der Erfindung ist in einer der Seitenwände der Wanne zumindest eine verschließbare Öffnung enthalten. Bei geöffneter Öffnung kann aus dem Gewässer gefördertes Wasser wieder direkt in das Gewässer austreten. Damit ist in einfacher Weise eine Zirkulation von Wasser in dem Gewässer realisierbar.

Weitere Merkmale, Anwendungsmöglichkeiten und Vorteile der Erfindung ergeben sich aus der nachfolgenden Beschreibung von Ausführungsbeispielen der Erfindung, die in zugehörigen Figuren dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Figuren.

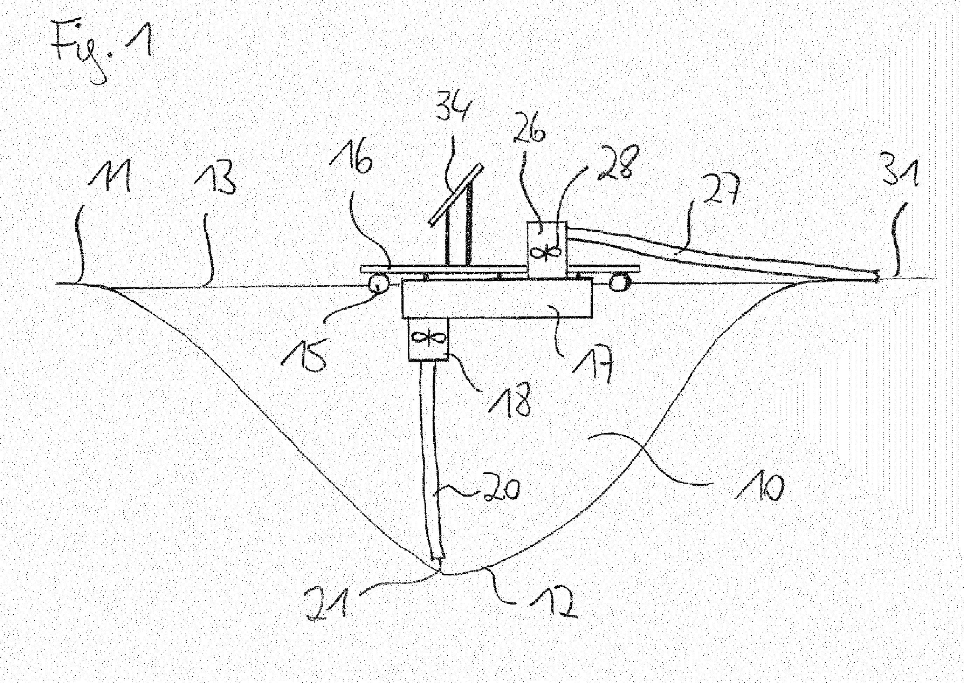

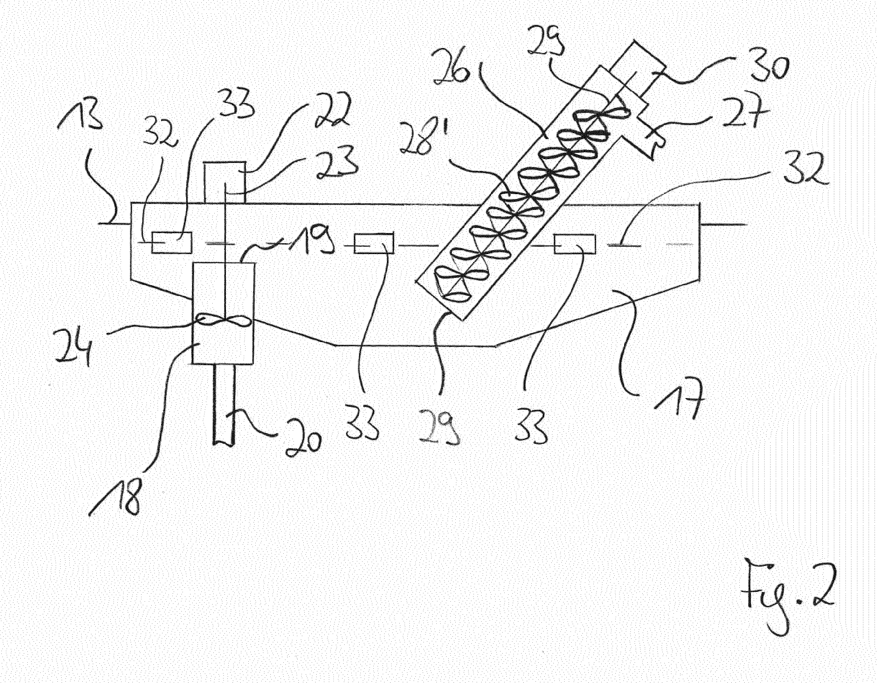

Die Figur 1 zeigt eine schematische Seitenansicht eines Ausführungsbeispiels einer erfindungsgemäßen Vorrichtung zur Entnahme von Wasser aus einem Gewässer, und die Figur 2 zeigt eine detailliertere schematische Seitenansicht der Vorrichtung der Figur 1.

In der Figur 1 ist schematisch ein Gewässer 10 in der Form eines Sees dargestellt. Insbesondere handelt es sich um ein stehendes Gewässer. Das Gewässer 10 weist ein Ufer 11 sowie einen Gewässergrund 12 auf. Die Wasseroberfläche des Gewässers 10 ist mit dem Bezugszeichen 13 gekennzeichnet.

Es wird darauf hingewiesen, dass die Figur 1 nicht maßstäblich dargestellt ist, sondern dass die Größenverhältnisse beispielsweise hinsichtlich der Tiefe des Gewässers 10 zum Zwecke einer besseren Darstellung verändert sind.

In dem Gewässer 10 schwimmt eine von Schwimmern 15 getragene Plattform 16. Wie nachfolgend anhand der Figuren 1 und 2 beschrieben wird, ist auf dieser Plattform 16 eine Vorrichtung zur Entnahme von Wasser angeordnet.

Es ist eine Wanne 17 vorhanden, die einen Boden und vier Seitenwände aufweist. Wie im Zusammenhang mit der Figur 2 noch erläutert werden wird, können in den Seitenwänden der Wanne 17 eine oder mehrere Öffnungen enthalten sein. Die Wanne 17 erstreckt sich im Wesentlichen etwa parallel zur Wasseroberfläche 13 und kann beispielsweise quaderförmig ausgebildet sein. Die Wanne 17 taucht mit ihrem Boden in das Wasser ein und steht mit ihren Seitenwänden über die Wasseroberfläche 13 über. Die Wanne 17 ist an der Plattform 16 befestigt, was in der Figur 1 nur schematisch angedeutet ist.

An dem Boden der Wanne 17 ist ein erstes Rohr 18 gehalten. Das erste Rohr 18 ist flüssigkeitsdicht mit dem Boden der Wanne 17 verbunden. Das erste Rohr 18 erstreckt sich ausgehend von dem Boden der Wanne 17 in etwa vertikaler Richtung nach unten in das Gewässer 10.

Das obere Ende 19 des ersten Rohrs 18 befindet sich unterhalb der Wasseroberfläche 13. Das obere Ende 19 kann beispielsweise etwa 10 cm unterhalb der Wasseroberfläche 13 angeordnet sein, kann sich aber gegebenenfalls auch bis zu 100 cm unterhalb der Wasseroberfläche 13 befinden.

Mit dem unteren Ende des ersten Rohrs 18 ist ein erster Schlauch 20 verbunden und nach unten in das Gewässer 10 geführt. Das untere Ende 21 des ersten Schlauchs 20 befindet sich oberhalb des Gewässergrunds 12 im Bereich der tieferen Schichten des Gewässers 10.

Auf der Plattform 16 ist ein erster Elektromotor 22 montiert, der über eine Welle 23 ein Schaufelrad 24 antreibt. Die Welle 23 verläuft etwa koaxial in dem ersten Rohr 18 und erstreckt sich von dem ersten Elektromotor 22 bis in den oberen Bereich des ersten Rohrs 18. Das Schaufelrad 24 ist im Inneren des ersten Rohrs 18 unterhalb des oberen Endes 19 angeordnet. Das Schaufelrad 24 ist an dem freien Ende der Welle 23 befestigt und kann damit um eine etwa koaxial zum ersten Rohr 18 verlaufende Achse rotieren.

Es versteht sich, dass anstelle des ersten Elektromotors 22 auch eine andere elektrische Einrichtung vorgesehen sein kann, und dass anstelle des Schaufelrads 24 auch ein Flügelrad oder eine Schnecke oder dergleichen verwendet werden kann.

Das Schaufelrad 24 wird derart angetrieben, dass das Wasser in dem ersten Rohr 18 nach oben bewegt wird. Damit ist es möglich, Wasser aus den tieferen Schichten des Gewässers 10 über den ersten Schlauch 20 nach oben zu fördern. Am oberen Ende 19 des ersten Rohrs 18 fließt das geförderte Wasser in die Wanne 17 ab und füllt die Wanne 17 mit Wasser auf.

Wie erläutert wurde, endet das erste Rohr 18 an seinem oberen Ende 19 unterhalb der Wasseroberfläche 13. Damit muss das in dem ersten Rohr 18 vorhandene Wasser von dem Schaufelrad 24 und damit von dem ersten Elektromotor 22 nur in eine Bewegung nach oben versetzt werden. Die für die Erzeugung dieser Wasserbewegung erforderliche Energie und damit der Energiebedarf des ersten Elektromotors 22 sind deshalb eher gering.

Wie in der Figur 1 schematisch dargestellt ist, ist der Wanne 17 ein zweites Rohr 26 zugeordnet. Das zweite Rohr 26 ist in nicht näher dargestellter Weise an der Wanne 17 befestigt. Das zweite Rohr 26 ist auf der Oberseite der Wanne 17 angeordnet und erstreckt sich nach oben in Richtung zu der Plattform 16 und gegebenenfalls über die Plattform 16 hinaus.

Gemäß der Figur 1 ist in einem Bereich des oberen Endes des zweiten Rohrs 26, der sich oberhalb der Wasseroberfläche 13 des Gewässers 10 befindet, ein zweiter Schlauch 27 angebracht. Innerhalb des zweiten Rohrs 26 ist ein Schaufelrad 28 enthalten. Mit Hilfe des Schaufelrads 28 kann Wasser aus der Wanne 17 zu dem zweiten Schlauch 27 gefördert werden.

In der Figur 2 ist eine beispielhafte Ausführung des zweiten Rohrs 26 und der anderen, vorstehend erläuterten Bauteile dargestellt. So ist das zweite Rohr 26 in der Figur 2 schräggestellt an der Wanne 17 befestigt. Das zweite Rohr 26 besitzt ein unteres Ende 29, das etwa im Bereich des Bodens der Wanne 17 angeordnet ist. Insbesondere ist das untere Ende 29 des zweiten Rohrs 26 unterhalb des oberen Endes 19 des ersten Rohrs 19 angeordnet. Weiterhin besitzt das zweite Rohr 26 einen oberen Bereich, der über die Wasseroberfläche 13 des Gewässers 10 hinausragt.

Im Inneren des zweiten Rohrs 26 ist bei der Figur 2 ein Schneckenrad 28' untergebracht, das an einer Welle 29 gehalten ist, die etwa koaxial in dem zweiten Rohr 26 ausgerichtet ist. An dem oberen Ende des zweiten Rohrs 26 ist ein zweiter Elektromotor 30 angeordnet, der mit der Welle 29 verbunden ist und diese antreibt.

Gemäß der Figur 2 ist im Bereich des oberen Endes des zweiten Rohrs 26 der zweite Schlauch 27 angebracht, und zwar beispielhaft in radial abstehender Richtung. Wie aus der Figur 1 hervorgeht, ist der zweite Schlauch 27 an das Ufer 11 des Gewässers 10 geführt und endet im dortigen Uferbereich, beispielsweise in einem gewässernahen Kiesbereich 31.

Wie erläutert wurde, taucht das zweite Rohr 26 mit seinem unteren Ende 29 in die Wanne 17 ein. Wenn die Wanne 17 beispielsweise bis zu der gestrichelt dargestellten Oberfläche 32 mit Wasser gefüllt ist, dann befindet sich das untere Ende 29 des Rohrs 26 unterhalb dieser Oberfläche 32. Es wird darauf hingewiesen, dass es sich bei der Oberfläche 32 nicht um die Wasseroberfläche 13 des Gewässers 10 handeln muss, sondern dass es sich dabei um die davon im Wesentlichen unabhängige Oberfläche des Wassers innerhalb der Wanne 17 handelt.

Wird nunmehr das Schneckenrad 28' von dem zweiten Elektromotor 30 in eine Drehbewegung versetzt, so fördert das Schneckenrad 28' Wasser aus der Wanne 17 bzw. aus dem unteren Bereich des zweiten Rohrs 26 durch das zweite Rohr 26 hindurch aufwärts in Richtung zu dem zweiten Schlauch 27. Über den zweiten Schlauch 27 fließt das Wasser dann in Richtung zu dem Kiesbereich 31 ab.

Das in der Wanne 17 bzw. in dem unteren Bereich des zweiten Rohrs 26 vorhandene Wasser muss von dem Schneckenrad 28' nur eine eher geringe Höhe über die Oberfläche 32 des Wassers in der Wanne 17 angehoben werden. Die hierfür erforderliche Energie und damit der Energiebedarf des zweiten Elektromotors 30 sind deshalb eher gering.

Zusätzlich kann in zumindest einer der Seitenwände der Wanne 17 eine verschließbare Öffnung 33 enthalten sein. Die Öffnung 33 befindet sich etwa auf dem Niveau der Wasseroberfläche 13 des Gewässers 10 oder geringfügig darunter. Die Öffnung 33 kann mit einem manuell betätigbaren Schieber oder dergleichen versehen sein, mit dem die Öffnung 33 geöffnet oder verschlossen werden kann.

Es versteht sich, dass auch mehrere Öffnungen 33 mit jeweils zugehörigen Schiebern in mehreren der Seitenwände der Wanne 17 vorgesehen sein können. In der Figur 2 sind die dort gezeigten Öffnungen 33 beispielhaft etwa rechteckförmig ausgebildet und unterhalb der Wasseroberfläche 13 angeordnet, beispielsweise etwa im Bereich der gestrichelt dargestellten Oberfläche 32 des innerhalb der Wanne 17 vorhandenen Wassers.

Sind in der Figur 2 die Öffnungen 33 mittels der jeweils zugehörigen Schieber verschlossen, so ändert sich an der Funktionsweise der anhand der Figuren 1 und 2 erläuterten Vorrichtung nichts.

Ist jedoch zumindest einer der zu den Öffnungen 33 zugehörigen Schieber geöffnet, so kann Wasser aus der Wanne 17 durch die Öffnung 33 hindurch in das Gewässer 10 austreten. Dies bedeutet mit anderen Worten, dass Wasser, das über den ersten Schlauch 20 aus dem Bereich der tieferen Schichten des Gewässers 10 in die Wanne 17 gefördert wird, über die offene Öffnung 33 wieder in das Gewässer 10 abgegeben wird. Auf diese Weise wird eine Zirkulation des Wassers innerhalb des Gewässers 10 erreicht.

Mit Hilfe der Öffnung 33 und dem zugehörigen Schieber kann somit die eingangs erläuterte Funktion der 20 2004 008 003 U1, nämlich die Zirkulation des Wassers innerhalb eines Gewässers, auch bei der vorliegend anhand der Figuren 1 und 2 erläuterten Vorrichtung erreicht werden.

Die Vorrichtung der Figuren 1 und 2 kann somit in drei unterschiedliche Arten betrieben werden. So ist es möglich, die Schieber der Öffnungen 33 zu verschließen und die erläuterte Vorrichtung nur zum Zwecke der Entnahme von Wasser aus dem Gewässer 10 mittels des ersten und zweiten Elektromotors 22, 30 und des ersten und zweiten Schlauchs 20, 27 zu verwenden. Weiterhin ist es möglich, die Schieber der Öffnungen 33 zu öffnen und die erläuterte Vorrichtung nur zum Zwecke der Zirkulation von Wasser innerhalb des Gewässers 10 zu verwenden; in diesem Fall kann der zweite Elektromotor 30 gegebenenfalls abgeschaltet werden. Und schließlich ist es möglich, die vorstehenden beiden Möglichkeiten in einer Kombination zu Verwenden. Bei dieser Kombinationsmöglichkeit können beispielsweise einige der Schieber der Öffnungen 33 geöffnet werden, um auf diese Weise einerseits eine Entnahme von Wasser über den Schlauch 27 aus dem Gewässer 10 heraus und andererseits eine Zirkulation von Wasser über die Öffnungen 33 innerhalb des Gewässers 10 zu erreichen.

Die letztgenannte Kombinationsmöglichkeit einer Entnahme und einer Zirkulation von Wasser kann insbesondere in Abhängigkeit von Untersuchungen bzw. Auswertungen des Wassers durchgeführt werden, indem beispielsweise in Abhängigkeit von einem ermittelten Sauerstoffgehalt des Wassers mehr oder weniger Öffnungen 33 geöffnet bzw. verschlossen werden.

Gemäß der Figur 1 ist auf der Plattform 16 eine photovoltaische Anlage 34 vorgesehen, mit der die für den Betrieb der beiden Elektromotoren 22, 30 erforderliche elektrische Energie erzeugt wird. Mit der in den Figuren 1 und 2 gezeigten Vorrichtung wird somit ein sogenannter Inselbetrieb realisiert, der unabhängig von einem Anschluss an ein öffentliches Energieversorgungsnetz funktionsfähig ist.

Es versteht sich, dass der erste Schlauch 20 nicht zwingend bis an den Gewässergrund 12 des Gewässers 10 geführt sein muss, sondern dass das untere Ende 21 des ersten Schlauchs 20 auch in einer geringeren Tiefe des Gewässers angeordnet sein kann.

Weiterhin kann es gegebenenfalls möglich sein, dass die erläuterte Vorrichtung nicht schwimmend in dem Gewässer 10 vorgesehen ist, sondern dass die genannte Vorrichtung auch am Ufer 11 des Gewässers 10 mit Hilfe von Stützen oder dergleichen in befestigter Weise aufgebaut sein kann. In diesem Fall kann dann der erste Schlauch 20 von dort in die erwünschte Tiefe des Gewässers 10 geführt sein. Diese befestigte Ausführungsform kann jedoch bei sich änderndem Niveau der Wasseroberfläche 13 des Gewässers 10 gegebenenfalls noch zusätzliche Maßnahmen erforderlich machen.

## Patentansprüche

1. Vorrichtung zur Entnahme von Wasser aus einem Gewässer (10), **dadurch gekennzeichnet, dass** eine Wanne (17) vorhanden ist, die einen Boden und Seitenwände aufweist, und die mit ihren Seitenwänden über die Wasseroberfläche (13) des Gewässers (10) übersteht, dass ein erstes Rohr (18) vorhanden ist, das sich von dem Gewässer (10) in die Wanne (17) erstreckt und dessen oberes Ende (19) sich unterhalb der Wasseroberfläche (13) des Gewässers (10) befindet, dass ein zweites Rohr (26) vorhanden ist, das mit einem unteren Ende (29) in die Wanne (17) eintaucht und mit einem oberen Bereich über die Wasseroberfläche (13) des Gewässers (10) hinausragt, und dass das Wasser aus dem Gewässer (10) über das erste Rohr (18) in die Wanne (17) und aus der Wanne (17) über das zweite Rohr (26) an ein Ufer (11) des Gewässers (10) förderbar ist.

2. Vorrichtung nach Anspruch 1, wobei in dem ersten Rohr (18) und/oder in dem zweiten Rohr (26) ein Schaufelrad (24, 28) oder ein Schneckenrad (28') oder dergleichen vorhanden sind.

3. Vorrichtung nach Anspruch 2, wobei das Schaufelrad (24, 28) und/oder das Schneckenrad (28') in dem ersten und dem zweiten Rohr (18, 26) von jeweils einem Elektromotor (22, 30) angetrieben sind.

4. Vorrichtung nach Anspruch 3, wobei eine photovoltaische Anlage (34) zur Erzeugung der für den Betrieb der Elektromotoren (22, 30) erforderlichen Energie vorhanden ist.

5. Vorrichtung nach einem der vorstehenden Ansprüche, wobei in einer der Seitenwände der Wanne (17) zumindest eine verschließbare Öffnung (33) enthalten ist.

6. Vorrichtung nach einem der vorstehenden Ansprüche, wobei das erste Rohr (18) mit einem ersten Schlauch (20) verbunden ist, der vorzugsweise bis zum Gewässergrund (12) des Gewässers (10) reicht.

7. Vorrichtung nach einem der vorstehenden Ansprüche, wobei das zweite Rohr (26) mit einem zweiten Schlauch (27) verbunden ist, der bis zum Ufer (11), vorzugsweise bis zu einem gewässernahen Kiesbereich (31) reicht.

8. Vorrichtung nach einem der vorstehenden Ansprüche, wobei die Wanne (17) und das erste und zweite Rohr (18, 26) an einer Plattform (16) gehalten sind, die schwimmend ausgebildet ist.
